(19) **Europäisches Patentamt / European Patent Office / Office européen des brevets**

(11) **EP 3 536 824 B1**

(12) # EUROPEAN PATENT SPECIFICATION

(45) Date of publication and mention
of the grant of the patent:
**21.04.2021 Bulletin 2021/16**

(51) Int Cl.:
***C25B 13/08*** (2006.01)      ***C25B 9/10*** (2006.01)
***C25B 1/10*** (2006.01)      ***C02F 1/46*** (2006.01)

(21) Application number: **17866786.1**

(86) International application number:
**PCT/JP2017/039639**

(22) Date of filing: **01.11.2017**

(87) International publication number:
**WO 2018/084220 (11.05.2018 Gazette 2018/19)**

(54) **SOLID POLYMER FILM ELECTRODE**

FESTE POLYMERFILMELEKTRODE

ÉLECTRODE EN FILM POLYMÈRE SOLIDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.11.2016 JP 2016216376**

(43) Date of publication of application:
**11.09.2019 Bulletin 2019/37**

(73) Proprietors:
• **Nihon Trim Co., Ltd.
Osaka 531-0076 (JP)**
• **Tanaka Kikinzoku Kogyo K.K.
Chiyoda-ku
Tokyo 100-6422 (JP)**

(72) Inventors:
• **YAMAUCHI Yuhei
Nankoku-shi
Kochi 783-0060 (JP)**
• **AMENOMORI Daiji
Nankoku-shi
Kochi 783-0060 (JP)**
• **FUKUTA Kenji
Shunan-shi
Yamaguchi 745-8648 (JP)**
• **YOSHIE Kiyotaka
Shunan-shi
Yamaguchi 745-8648 (JP)**

• **MATSUOKA Isao
Shunan-shi
Yamaguchi 745-8648 (JP)**
• **ARIMOTO Tasuku
Hiratsuka-shi
Kanagawa 254-0021 (JP)**
• **UEDA Tetsuya
Hiratsuka-shi
Kanagawa 254-0021 (JP)**
• **IMAI Junichi
Hiratsuka-shi
Kanagawa 254-0021 (JP)**
• **SATOH Tomokazu
Hiratsuka-shi
Kanagawa 254-0021 (JP)**

(74) Representative: **Hoffmann Eitle
Patent- und Rechtsanwälte PartmbB
Arabellastraße 30
81925 München (DE)**

(56) References cited:
**WO-A1-2014/157389      WO-A1-2016/140102
JP-A- H0 693 114      JP-A- H06 296 964
JP-A- H09 165 689      JP-A- H10 286 571
JP-A- 2005 133 146      JP-A- 2008 108 673
US-A- 4 384 941**

**Description**

TECHNICAL FIELD

The present invention relates to a solid polymer membrane electrode for generating electrolyzed water, an electrolyzed water generator using the same, a generation method of electrolyzed water, use of a solid polymer membrane for producing the solid polymer membrane electrode, and use of the solid polymer membrane electrode for generating electrolyzed water.

BACKGROUND ART

The electrolyzed water which is obtained through electrolysis of water is roughly classified into acidic electrolyzed water generated on the anode side and alkaline electrolyzed water generated on the cathode side. Of these, the alkaline electrolyzed water generated on the cathode side is also called electrolyzed hydrogen water and has reducibility, and therefore, it is expected to be advantageously workable for various abnormalities or diseases which may be possibly caused from the oxidative condition in a living body. For example, by drinking the electrolyzed hydrogen water, improving effects in various gastrointestinal symptoms, such as chronic diarrhea, hyperacidity, antacid, indigestion, and abnormal gastrointestinal fermentation, are recognized.

In order to conveniently generate the hydrolyzed hydrogen water in home, various electrolyzed water generators have been known up to date. According to such devices, the electrolyzed hydrogen water can be conveniently generated by using mainly tap water.

As such an electrolyzed water generator, a device having a cathode chamber containing a cathode and an anode chamber containing an anode, these chambers being separated from each other with a diaphragm, is known (Patent Literature 1). In a device of this kind, for example, as illustrated in FIG 1, an electrolytic cell 3a having two chambers of a cathode chamber 4 having a cathode 7 and an anode chamber 10 having an anode 9 separated from each other with a diaphragm 8 is installed.

In the case of electrolyzing tap water or the like by using the above-described electrolyzed water generator, the following electrolysis reaction takes place in the anode 9 in the anode chamber 10 and the cathode 7 in the cathode chamber 4, and the electrolyzed hydrogen water is obtained from the cathode chamber 4.

$$\text{Anode: } 2H_2O \rightarrow O_2 + 4H^+ + 4e^-$$

$$\text{Cathode: } 4H_2O + 4e^- \rightarrow 2H_2 + 4OH^-$$

Patent Literature 2 is directed to a process for electrolysis of pure water in an electrolytic cell. Patent Literature 3 relates to a polymer electrolyte membrane comprising a polymer having an arylene sulfide skeleton and being soluble in an organic solvent. Patent Literature 4 is related to a hydrocarbon solid polymer electrolyte membrane containing a sulfone group and/or a carboxyl group and its application in a fuel cell.

RELATED ART

PATENT LITERATURE

Patent Literature 1: JP H09-077672 A
Patent Literature 2: US 4 384 941 A
Patent Literature 3: WO 2014/157389 A1
Patent Literature 4: JP 2008 108673 A

SUMMARY OF INVENTION

TECHNICAL PROBLEM

In this electrolysis mode, since $OH^-$ is generated in the cathode as expressed by the above-described reaction formulae, as the electrolysis of water to be electrolyzed proceeds, the pH of the generated electrolyzed hydrogen water increases. In consequence, when the electrolysis of the water to be electrolyzed is continued, the pH of the electrolyzed hydrogen water exceeds a tolerable pH for drinking water after a while, and therefore, an electrolysis time or an electrolytic current value of the water to be electrolyzed must be made limitative. As a result, a dissolved-hydrogen amount in the obtained electrolyzed hydrogen water was not sufficient.

SOLUTION TO PROBLEM

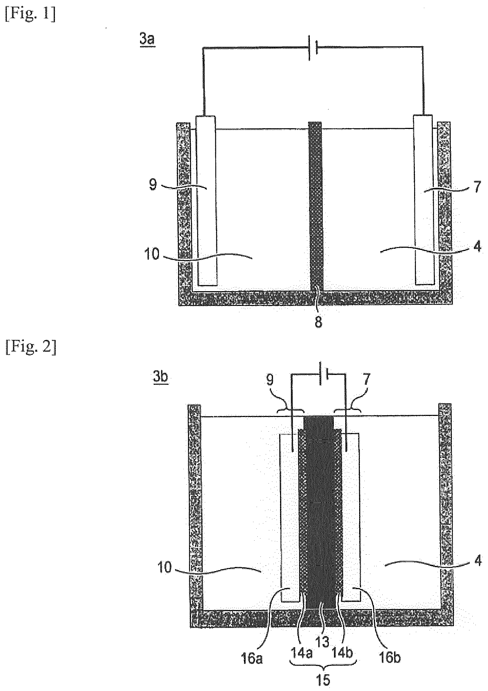

Then, the present inventors searched any method capable of suppressing an increase of the pH of electrolyzed hydrogen water even when performing the electrolysis. As one method of electrolyzing water, a method of using a solid polymer membrane electrode is also known up to date. The solid polymer membrane electrode as referred to herein refers to an electrode having a structure in which a solid polymer membrane 13, such as a cation exchange membrane, is provided with catalyst layers 14a and 14b working as a catalyst for electrolysis of water, as illustrated in FIG. 2.

The present inventors paid attention to the matter that in the case of performing electrolysis of tap water or the like with a solid polymer membrane electrode 15, in an anode 9 in an anode chamber 10 and a cathode 7 in a cathode chamber 4, the following electrolysis reaction takes place.

$$\text{Anode: } H_2O \rightarrow 1/2O_2 + 2H^+ + 2e^-$$

$$\text{Cathode: } 2H^+ + 2e^- \rightarrow H_2$$

In the case of using a cation exchange membrane for a solid polymer membrane, $H^+$ is supplied from an anode to a cathode following the energization, and $H^+$ is liable to be electrolytically reduced as compared with $H_2O$, and therefore, the above-described cathodic reaction chiefly proceeds. As noted from the above-described formulae, in the case of using the solid polymer membrane electrode 15 for electrolysis of tap water or the like, it was thought that different from a conventional electrolyzed water generator provided with the electrolytic cell 3a using the diaphram 8, the generation of $OH^-$ can be suppressed in the cathode chamber 4 from which the electrolyzed hydrogen water is obtained.

However, it has newly become clear that even by performing the electrolysis with the above-described solid polymer membrane electrode, a problem that the pH of the electrolyzed hydrogen water on the cathode chamber side increases at the initiation stage of electrolysis occurs. The present inventors investigated any cause regarding this problem. As a result, the present inventors thought that the matter that when a plenty of cation in the liquid, such as a Ca ion, is taken into the ion exchange membrane at standby time of energization, the movement of, in addition to $H^+$ in the membrane, the cation, such as a Ca ion, into the cathode increases, thereby disturbing supply of $H^+$ into the cathode at the time of electrolysis (at start time of electrolysis); and thus, the reaction amount of $2H^+ + 2e^- \rightarrow H_2$ is decreased, and in return, secondary occurrence of a reaction of $4H_2O + 4e^- \rightarrow 2H_2 + 4OH^-$ on the cathode side is a cause of the pH increase.

Then, the present inventors made extensive investigations regarding means for solving the above-described problem. As a result, it has been found that by using a cation exchange membrane, an ion exchange capacity of which falls within a specified range, as the solid polymer membrane 13 to be used for the above-described solid polymer membrane electrode 15, an increase of the pH of the generated electrolyzed hydrogen water can be suppressed, thereby leading to accomplishment of the present invention.

Specifically, the present invention is as follows.

1. A solid polymer membrane electrode for generating electrolyzed water, wherein
the solid polymer membrane electrode comprises a solid polymer membrane and catalyst layers containing a platinum group metal and provided on the back and front of the solid polymer membrane;
the solid polymer membrane has an ion exchange capacity per unit area of 0.002 mmol/cm$^2$ or more and 0.030 mmol/cm$^2$ or less, the ion exchange capacity per unit area being measured as defined in the description; and
the solid polymer membrane is a hydrocarbon-based cation exchange membrane, containing at least one hydrocarbon-based polymer selected from the group consisting of sulfonated poly(arylene ether ether ketone) ("SPEEK"), sulfonated poly(ether ether ketone ketone) ("SPEEKK"), sulfonated poly(arylene ether sulfone) ("SPES"), sulfonated poly(arylene ether benzonitrile), sulfonated polyimide ("SPI"), sulfonated poly(styrene), sulfonated poly(styrene-b-isobutylene-b-styrene) ("S-SIBS"), and sulfonated poly(styrenedivinylbenzene).
2. The solid polymer membrane electrode according to above 1, wherein a membrane thickness thereof is 10 $\mu$m or more and 170 $\mu$m or less.
3. The solid polymer membrane electrode according to above 1, wherein a thickness of each of the catalyst layers is 0.30 $\mu$m or less.
4. The solid polymer membrane electrode according to above 1, wherein the platinum group metal is at least one metal selected from the group consisting of platinum, iridium, platinum oxide, and iridium oxide.
5. The solid polymer membrane electrode according to above 1, which is suitable for generating electrolyzed water by using an aqueous solution containing a cation.

6. The solid polymer membrane electrode according to above 5, wherein the aqueous solution containing a cation is tap water.

7. The solid polymer membrane electrode according to above 1, which is suitable for generating electrolyzed water for beverage use.

8. An electrolyzed water generator comprising at least:

an electrolytic cell including the solid polymer membrane electrode according to above 1 and an anode power feeder and a cathode power feeder disposed opposite to each other via the solid polymer membrane electrode;

a unit for flowing water to be electrolyzed into the electrolytic cell; and

a unit for applying a voltage to the water to be electrolyzed within the electrolytic cell to flow an electric current thereinto.

9. The electrolyzed water generator according to above 8, further comprising a polarity switching unit of the voltage to be applied to the anode power feeder and the cathode power feeder in the solid polymer membrane electrode within the electrolytic cell.

10. A generation method of electrolyzed water comprising the steps of:

preparing an electrolytic cell in which an anode chamber containing an anode and a cathode chamber containing a cathode are isolated from each other with the solid polymer membrane electrode according to above 1;

flowing water to be electrolyzed into each of the cathode chamber and the anode chamber;

applying a voltage between the cathode and the anode to flow an electric current into the water to be electrolyzed, thereby generating electrolyzed water; and

taking out the electrolyzed water generated within the cathode chamber.

11. Use of a solid polymer membrane which has an ion exchange capacity per unit area of 0.002 mmol/cm$^2$ or more and 0.030 mmol/cm$^2$ or less and is a hydrocarbon-based cation exchange membrane, containing at least one hydrocarbon-based polymer selected from the group consisting of sulfonated poly(arylene ether ether ketone) ("SPEEK"), sulfonated poly(ether ether ketone ketone) ("SPEEKK"), sulfonated poly(arylene ether sulfone) ("SPES"), sulfonated poly(arylene ether benzonitrile), sulfonated polyimide ("SPI"), sulfonated poly(styrene), sulfonated poly(styrene-b-isobutylene-b-styrene) ("S-SIBS"), and sulfonated poly(styrene-divinylbenzene) for producing the solid polymer membrane electrode according to above 1, the ion exchange capacity per unit area being measured as defined in the description.

12. Use of a solid polymer membrane electrode according to above 1 for generating electrolyzed water by using an aqueous solution containing a cation.

13. The use according to above 12, wherein the aqueous solution containing a cation is tap water.

14. The use according to above 12, wherein the generated electrolyzed water is used for producing beverage.

ADVANTAGEOUS EFFECTS OF INVENTION

The solid polymer membrane electrode of the present invention uses a solid polymer membrane having an ion exchange capacity per unit area in a specified range, so that it is able to suppress an increase of the pH of the electrolyzed hydrogen water at the time of electrolysis. According to this, for example, in the case of performing the electrolysis using tap water, electrolyzed hydrogen water having an increased dissolved-hydrogen amount can be obtained while suppressing an increase of the pH.

In addition, for example, even when electrolysis is further performed by using electrolyzed hydrogen water having a pH of 9 or more (pH = less than 10) as water to be electrolyzed, an increase of the pH can be suppressed, and therefore, only the dissolved-hydrogen amount can be increased while maintaining the tolerable pH (pH = less than 10) as drinking water, and electrolyzed hydrogen water having a sufficient dissolved-hydrogen amount can be obtained.

BRIEF DESCRIPTION OF DRAWINGS

[FIG. 1] FIG. 1 is a view illustrating a cross-sectional view of a conventional electrolytic cell separated with a diaphragm.

[FIG. 2] FIG. 2 is a view illustrating a cross-sectional view of an electrolytic cell using a solid polymer membrane electrode of the present invention.

[FIG. 3] FIG. 3 is a view illustrating an outline of an electrolyzed water generator using a solid polymer membrane electrode of the present invention.

DESCRIPTION OF EMBODIMENTS

The embodiment of the electrode of the present invention is hereunder described in detail with reference to the accompanying drawings.
It is to be noted that the electrolyzed water as referred to in this specification means electrolyzed hydrogen water generated on the cathode side unless otherwise indicated.

[Solid polymer membrane electrode]

As illustrated in FIG. 2, a solid polymer membrane electrode 15 in the present invention includes a solid polymer membrane 13 and catalyst layers 14a and 14b provided on the back and front of the solid polymer membrane 13. The catalyst layer 14a and the catalyst layer 14b are corresponding to the anode side and to the cathode side, respectively.

(Catalyst layer)

The catalyst layer 14a on the anode side and the catalyst layer 14b on the cathode side each contain a platinum group metal as a material. Examples of the platinum group metal include platinum, iridium, platinum oxide, and iridium oxide. The above-described catalyst layers may each contain such a metal alone or in combination of plural kinds thereof.
Above all, it is preferred that the above-described platinum group metal is at least one metal selected from the group consisting of platinum, iridium, platinum oxide, and iridium oxide. From the viewpoints of high durability and generation of dissolved hydrogen in high efficiency, it is more preferred that the catalyst layer contains platinum.
A membrane thickness of each of the catalyst layer 14a on the anode side and the catalyst layer 14b on the cathode side is preferably 0.30 $\mu$m or less. Even when the membrane thickness of each of the above-described catalyst layers is the above-described fixed value or less, in view of the fact that conditions regarding the ion exchange capacity of a cation exchange membrane as described later are satisfied, an increase of the pH of the hydrolyzed hydrogen water at the time of electrolysis can be suppressed. In addition, the use amount of the platinum group metal can be decreased, and hence, such is economical.
The membrane thickness of the catalyst layer is more preferably 0.010 $\mu$m or more and 0.30 $\mu$m or less, and still more preferably 0.050 $\mu$m or more and 0.20 $\mu$m or less. When the membrane thickness of the catalyst layer falls within the above-described range, appropriate durability is obtained, an overvoltage is low, and the generation amount of dissolved hydrogen is obtained in high efficiency.
Though a method of providing the catalyst layer 14a on the anode side and the catalyst layer 14b on the cathode side on the back and front of the solid polymer membrane, respectively is not particularly limited, examples thereof include a method of subjecting materials of the above-described catalyst layers to electroless plating or electroplating on the solid polymer membrane; and a method of closely adhering powders of materials of the above-described catalyst layers to each other through hot pressing. A specific method is described later in the section of Examples.

(Solid polymer membrane)

The solid polymer membrane in the present invention is one to be used for a solid polymer membrane electrode for the purpose of generating electrolyzed water and is a cation exchange membrane having a role of moving a hydrogen ion (H$^+$) generated on the anode side through electrolysis into the cathode side.
As for the solid polymer membrane electrode of the present invention, the ion exchange capacity per unit area of the solid polymer membrane to be used falls within a specified range, so that electrolyzed water in which an increase of the pH is suppressed and which has a sufficient dissolved-hydrogen amount can be obtained. That is, in the solid polymer membrane in the present invention, the ion exchange capacity per unit area is 0.030 mmol/cm$^2$ or less. In view of the fact that the ion exchange capacity per unit area is 0.030 mmol/cm$^2$ or less, the increase of the pH of the electrolyzed water can be suppressed to a low level.
The ion exchange capacity per unit area of the solid polymer membrane is preferably 0.025 mmol/cm$^2$ or less, more preferably 0.020 mmol/cm$^2$ or less, and still more preferably 0.010 mmol/cm$^2$ or less. In addition, a lower limit value of the ion exchange capacity per unit area is 0.002 mmol/cm$^2$.
In the solid polymer membrane electrode of the present invention, so long as the membrane thickness of the solid polymer membrane to be used falls within a specified range, and electrolyzed water in which an increase of the pH is suppressed and which has a sufficient dissolved-hydrogen amount can be obtained, and hence, such is preferred. That is, in the solid polymer membrane in the present invention, the membrane thickness is preferably 10 $\mu$m or more and 170 $\mu$m or less. In view of the fact that the membrane thickness of the solid polymer membrane falls within the above-described range, the increase of the pH of the electrolyzed water can be suppressed to a low level.

The membrane thickness of the solid polymer membrane is preferably 10 μm or more and 160 μm or less, more preferably 15 μm or more and 150 μm or less, still more preferably 20 μm or more and 130 μm or less, and especially preferably 20 μm or more and 80 μm or less.

In view of the fact that the membrane thickness is the above-described lower limit value or more, a mechanical strength necessary as a supporting membrane can be imparted. In addition, in view of the fact that the membrane thickness is the above-described upper limit or less, the membrane resistance can be suppressed to a low level.

Though the reason why the increase of the pH of the electrolyzed water can be suppressed to a low level in view of the fact that the ion exchange capacity of the solid polymer membrane falls within the above-described range is not elucidated yet, the following may be conjectured. That is, in a membrane in which the ion exchange capacity is more than the above-described range, a plenty of cation in the liquid, such as a Ca ion, is taken into the ion exchange membrane at standby time of energization. For this reason, at the time of electrolysis (at the time of start of electrolysis), the movement of, in addition to $H^+$ in the membrane, the cation, such as the above-described Ca ion, into the cathode increases, and release of such a cation becomes slow, too. According to this, it may be conjectured that supply of $H^+$ into the cathode is disturbed, and as a result, the reaction amount of $2H^+ + 2e^- \rightarrow H_2$ is decreased, and in return, a reaction of $4H_2O + 4e^- \rightarrow 2H_2 + 4OH^-$ secondarily occurs on the cathode side.

The reason why the matter that the membrane thickness of the solid polymer membrane falls within the above-described range is preferred may be thought to reside in the following matter. That is, release of the cation having been ion-exchanged within the membrane, such as a Ca cation, becomes slow, and the cation to be not only ion-exchanged but also taken as a sub-ion, such as a Ca ion, increases, whereby the increase of the pH of the electrolyzed water is suppressed to a low level due to the above-described action mechanism.

As the solid polymer membrane, a hydrocarbon-based cation exchange membrane is used.

The hydrocarbon-based cation exchange membrane is less in the generation of a strain and is small in a degree of shrinkage between the case where the membrane contains moisture and is swollen and the case where the membrane is dried. Therefore, the generation of a fault, such as breakage to be caused due to the presence or absence of water in the electrolyzed water generator, or formation of a clearance against a tool, can be suppressed. In addition, contact of the membrane with a power feeder is kept, and therefore, the generation amount of dissolved hydrogen in the electrolyzed water can be made stable. In addition, even when membrane elution into the electrolyzed water is generated due to a trouble or the like, no adverse influence against the human body is brought, and the resulting electrolyzed water is suitable for beverage use.

(Hydrocarbon-based cation exchange membrane)

The hydrocarbon-based cation exchange membrane as referred to herein refers to a cation exchange membrane in which a matrix portion exclusive of an ion exchange group is constituted of a hydrocarbon-based polymer. Here, the hydrocarbon-based polymer indicates a polymer which does not substantially contain a carbon-fluorine bond and in which the majority of a skeleton bond of a main chain and a side chain constituting the polymer is constituted of a carbon-carbon bond. In the intervals of the carbon-carbon bond constituting the above-described main chain and side chain, a small amount of other atom, such as oxygen, nitrogen, silicon, sulfur, boron, and phosphorus may intervene through an ether bond, an ester bond, an amide bond, a siloxane bond, or the like.

As for the atoms bonding to the above-described main chain and side chain, all of them are not always a hydrogen atom but may be substituted with other atom, such as chlorine, bromine, fluorine, and iodine, or a substituent containing other atom so long as its amount is small.

A cation exchange group which the hydrocarbon-based cation exchange membrane has is not particularly limited so long as it is a functional group having a negative charge and having a conduction function of a proton (hydrogen ion). Specifically, examples thereof include a sulfonic group, a carboxylic group, and a phosphonic group. Of those, a sulfonic group that is a strongly acidic group is especially preferred from the standpoint that even when the exchange capacity is small, the electric resistance of the membrane becomes low.

Specifically, as the hydrocarbon-based polymer having a cation exchange group, which is used for the hydrocarbon-based cation exchange membrane of the present invention, at least one hydrocarbon-based polymer selected from the group consisting of sulfonated poly(arylene ether ether ketone) ("SPEEK"), sulfonated poly(ether ether ketone ketone) ("SPEEKK"), sulfonated poly(arylene ether sulfone) ("SPES"), sulfonated poly(arylene ether benzonitrile), sulfonated polyimide ("SPI"), sulfonated poly(styrene), sulfonated poly(styrene-b-isobutylene-b-styrene) ("S-SIBS"), and sulfonated poly(styrenedivinylbenzene) is used.

The hydrocarbon-based cation exchange membrane in the present invention may have any structure or may be produced by any method so far as the ion exchange capacity per unit area is satisfied with the above-described specified value; however, it is preferably one using, as a reinforcing base, a porous membrane, such as a fibrous film, a nonwoven fabric, and a woven fabric, from the standpoint that the physical strength of the cation exchange membrane can be enhanced without sacrificing the electric resistance and so on.

That is, one obtained by dissolving the above-described hydrocarbon-based polymer having a cation exchange group in an organic solvent or the like and subjecting the solution to cast film-forming on a reinforcing base in a film shape, such as a porous membrane; or one obtained by filling a monomer having an ion exchange group or a monomer having a functional group capable of introducing an ion exchange group in voids of a reinforcing base in a film shape, such as a porous membrane, and then performing photo-thermal polymerization, and further introducing a cation exchange group, as needed, can be used.

Above all, a cation exchange membrane obtained by filling a polymerizable monomer composition resulting from mixing of a monomer capable of introducing an ion exchange group, such as styrene, a crosslinkable monomer, such as divinylbenzene, a polymerization initiator, such as an organic peroxide, and various additives which are conventionally known as additives for an ion exchange membrane, in voids of a reinforcing base in a film shape, such as a porous membrane, and then performing thermal polymerization, followed by introducing a sulfonic group into the resulting film-shaped material is especially preferred from the standpoint that the electric resistance can be made low without impairing the mechanical strength or swelling resistance.

As for such a cation exchange membrane, the ion exchange capacity per unit area or the membrane thickness can be allowed to fall within the above-described value range by suitably combining a method of regulating the introduction amount of a cation exchange group of the hydrocarbon-based polymer having a cation exchange group in the case of cast film-forming, or a method of mixing a polymerizable monomer composition with a monomer not capable of introducing an ion exchange group or a polymer additive in the case of production process of thermally polymerizing a monomer, with a method of regulating the membrane thickness of a porous membrane that is a reinforcing base.

Such a cation exchange membrane can be prepared by a method described in, for example, JP 2006-206632 A, JP 2008-45068 A, JP 2005-5171 A, and JP 2016-22454 A.

The water to be electrolyzed, which can be used for the generation of electrolyzed water by using the solid polymer membrane electrode of the present invention is not particularly limited, and for example, tap water, pure water, salt water, well water, and hot spring water can be used. From the viewpoint of easiness of availability, tap water can be preferably used. According to the solid polymer membrane electrode of the present invention, even when tap water or the like is used as the water to be electrolyzed, the electrolyzed hydrogen water having a sufficient dissolved-hydrogen amount can be obtained while suppressing an increase of the pH of the generated electrolyzed hydrogen water.

As described above, when the cation in the water to be hydrolyzed is taken into the solid polymer membrane, supply of $H^+$ having passed through the membrane into the cathode is disturbed, and the pH of the hydrolyzed hydrogen water is increased. In the present invention, by allowing the ion exchange capacity per unit area of the solid polymer membrane to fall within a specified range, the pH increase to be caused due to the above-described putative mechanism can be suppressed. However, as an aqueous solution containing a cation, one having the content of the cation of 5 mg/L or more, and more suitably 10 mg/L or more is preferred because the problem of the increase of the pH is conspicuously caused, and therefore, the effects of the present invention are remarkable. On the other hand, when the content of the cation is excessively high, the effect for suppressing the pH increase becomes small, and therefore, it is preferred to control the content of the cation to 5,000 mg/L or less, and more suitably 300 mg/L or less.

Typically, examples of the aqueous solution containing a cation include an aqueous solution containing a cation, such as $Ca^{2+}$, $Mg^{2+}$, $Na^+$, and $K^+$, and specifically, tap water, well water, hot spring water, and so on are corresponding thereto. It is to be noted that as is obvious from the above-described suppressing mechanism regarding the pH increase, the $H^+$ ion is not included in the above-described cation.

Examples of an application of the electrolyzed water which is obtained by using the solid polymer membrane electrode of the present invention include beverage use, blood dialysis use, and agricultural use.

[Electrolytic cell]

As illustrated in FIG. 2, the electrolytic cell 3b in the present invention includes the anode chamber 10 and the cathode chamber 4, which are isolated from each other with the solid polymer membrane electrode 15. An anode power feeder 16a and a cathode power feeder 16b are provided on the catalyst layer 14a on the anode side and the catalyst layer 14b on the cathode side of the solid polymer membrane electrode 15, respectively. That is, the electrolytic cell 3b includes the above-described solid polymer membrane electrode 15 and the anode power feeder 16a and the cathode power feeder 16b disposed opposite to each other via the solid polymer membrane electrode 15. The power feeder is not particularly limited with respect to the kind thereof, and conventionally known ones can be used.

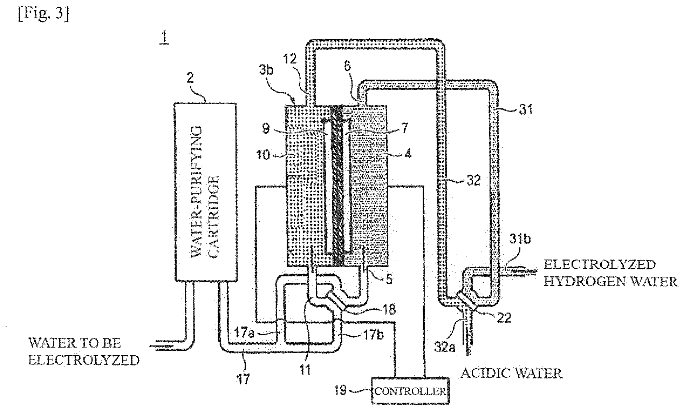

In the case of using the electrolytic cell 3b upon being installed in an electrolyzed water generator as described later, as illustrated in FIG. 3, the electrolytic cell 3b may be provided with a cathode chamber inlet 5 into which the water to be electrolyzed, such as tap water, is supplied and a cathode chamber outlet 6 from which electrolyzed water generated in the cathode chamber 4 is discharged. Besides, the electrolytic cell 3b may be provided with an anode chamber inlet 11 into which the water to be electrolyzed, such as tap water, is supplied and an anode chamber outlet 12 from which acidic water generated in the anode chamber 10 is discharged.

[Electrolyzed water generator]

The present invention also provides an electrolyzed water generator including the above-described solid polymer membrane electrode. The electrolyzed water generator of the present invention is provided with at least an electrolytic cell including the above-described solid polymer membrane electrode and the anode power feeder and the cathode power feeder disposed opposite to each other via the foregoing solid polymer membrane electrode; a unit for flowing the water to be electrolyzed into the electrolytic cell; and a unit for applying a voltage to the water to be electrolyzed within the electrolytic cell to flow an electric current thereinto.

In the electrolyzed water generator of the present invention, as the electrolytic cell, one described above can be used. In addition, the unit for flowing the water to be electrolyzed into the electrolytic cell and the unit for applying a voltage to the water to be electrolyzed within the electrolytic cell to flow an electric current thereinto are not particularly limited, and conventionally known methods are arbitrarily applicable.

One embodiment of the electrolyzed water generator of the present invention is hereunder illustrated in a drawing and described, but it should be construed that the electrolyzed water generator of the present invention is not limited to the following example.

FIG. 3 illustrates a diagrammatic configuration of one embodiment of the electrolyzed water generator of the present embodiment. In the present embodiment, a household electrolyzed water generator which is used for the generation of household drinking water is exemplarily illustrated as an electrolyzed water generator 1. In FIG. 3, the electrolyzed water generator 1 in a state of generating electrolyzed hydrogen water for beverage use is illustrated.

The electrolyzed water generator 1 is provided with a water-purifying cartridge 2 which purifies the water to be electrolyzed, such as tap water, the electrolytic cell 3b into which purified water is supplied, and a controller 19 of controlling the each part of the electrolyzed water generator 1. It is to be noted that in the electrolyzed water generator of the present invention, even in the case where it does not have the water-purifying cartridge 2, it is possible to electrolyze tap water or the like, thereby generating electrolyzed water having a sufficient dissolved-hydrogen amount while suppressing the pH increase, as described above. In the case where the electrolyzed water generator does not have the water-purifying cartridge 2, the water to be electrolyzed is flown directly into the electrolytic cell 3b.

The water to be electrolyzed which has been flown into the electrolytic cell 3b is electrolyzed thereupon. A unit for flowing the water to be electrolyzed into the electrolytic cell 3b is described later. The electrolytic cell 3b is provided with the solid polymer membrane electrode 15 including the anode power feeder 16a and the cathode power feeder 16b disposed opposite to each other and the solid polymer membrane 13 disposed between the anode power feeder 16a and the cathode power feeder 16b.

The solid polymer membrane electrode 15 divides the electrolytic cell 3b into the cathode chamber 4 and the anode chamber 10. The solid polymer membrane electrode 15 allows the cation generated through electrolysis of the water to be electrolyzed to pass from the anode chamber 10 to the cathode chamber 4, and the cathode 7 and the anode 9 are electrically connected with each other via the solid polymer membrane electrode 15. When a voltage is applied between the cathode 7 and the anode 9, the water to be electrolyzed is electrolyzed within the electrolytic cell 3b, thereby obtaining electrolyzed water. That is, the electrolyzed hydrogen water and the acidic water are generated in the cathode chamber 4 and in the anode chamber 10, respectively.

A polarity of each of the cathode 7 and the anode 9 and a voltage to be applied to the water to be electrolyzed of the electrolytic cell 3b are controlled by the controller 19.

Preferably, the electrolyzed water generator of the present invention is further provided with a polarity switching unit of the voltage to be applied to the anode power feeder and the cathode power feeder in the solid polymer membrane electrode within the electrolytic cell. For example, the controller 19 may be provided with a polarity switching circuit (not illustrated) for the purpose of switching the polarity of the cathode 7 and the anode 9. That is, the electrolyzed water generator 1 may be provided with a polarity switching unit of the voltage to be applied to the anode power feeder 16a and the cathode power feeder 16b in the solid polymer membrane electrode 15 within the electrolytic cell 3b. By providing the polarity switching unit of the voltage, attachment of a scale to the solid polymer membrane electrode on performing electrolysis using the water to be electrolyzed, such as tap water, can be suppressed.

One example of the unit for flowing the water to be electrolyzed into the electrolytic cell 3b is described. A first channel switching valve 18 is provided on the upstream side of the electrolytic cell 3b into which the water to be electrolyzed flows. The first channel switching valve 18 is provided in a water supply channel 17 of communicating the water-purifying cartridge 2 and the electrolytic cell 3b with each other. The water purified by the water-purifying cartridge 2 flows into the first channel switching valve 18 via a first water supply channel 17a and a second water supply channel 17b of the water supply channel 17 and is supplied into the anode chamber 10 or the cathode chamber 4.

The electrolyzed hydrogen water generated in the cathode chamber 4 is flown from the cathode chamber outlet 6 into a first channel 31 and then recovered from a spout 31b via a channel switching valve 22. It is to be noted that the acidic water generated in the anode chamber 10 is flown from the anode chamber outlet 12 into a second channel 32 and then discharged from a drain port 32a via the channel switching valve 22.

[Generation method of electrolyzed water]

The present invention also provides a generation method of electrolyzed water by using the above-described solid polymer membrane electrode. The generation method of electrolyzed water of the present invention includes the steps of: preparing an electrolytic cell in which an anode chamber containing an anode and a cathode chamber containing a cathode are isolated from each other with the above-described solid polymer membrane electrode; flowing water to be electrolyzed into each of the cathode chamber and the anode chamber; applying a voltage between the cathode and the anode to flow an electric current into the water to be electrolyzed, thereby generating electrolyzed water; and taking out the electrolyzed water generated within the cathode chamber.

It is possible to carry out the above-described generation method of electrolyzed water by, for example, using the above-described electrolyzed water generator.

According to the generation method of electrolyzed water of the present invention, the electrolysis of water to be electrolyzed is performed by using the solid polymer membrane electrode including a solid polymer membrane having an ion exchange capacity per unit area in a specified range, so that electrolyzed water in which an increase of the pH is suppressed and which has a sufficient dissolved-hydrogen amount is obtained. In addition, an increase of a cell voltage during the electrolysis can be suppressed, and the cell voltage becomes stable. In view of the fact that the cell voltage during the electrolysis becomes stable, an increase of the water temperature can be suppressed.

It may be considered that the reason why the increase of the cell voltage can be suppressed by using the solid polymer membrane having an ion exchange capacity in a specified range resides in the matter that taking of a cation, such as a Ca ion, into the membrane at electroless time is small, as described above.

As for the electrolyzed water which is obtained by the generation method of electrolyzed water of the present invention, on flowing an electric current under a condition at a current amount per unit water intake amount of 6 A/(L/min), in the case where raw water has a pH in the vicinity of 7 (e.g., tap water, etc.), it is preferred that a maximum value of the pH of the electrolyzed water to be generated within the cathode chamber during the electrolysis is 8.5 or less. The maximum value of the pH during the electrolysis is more preferably 8.3 or less, and still more preferably 8.0 or less. By generating the electrolyzed water by using the solid polymer membrane electrode of the present invention, it becomes possible to regulate the pH to the above-described range.

In the case of performing the electrolysis of water to be electrolyzed under the same condition as that described above, the dissolved-hydrogen amount of the electrolyzed water to be generated within the cathode chamber 100 seconds after starting the electrolysis is preferably 500 ppb or more, more preferably 650 ppb or more, still more preferably 700 ppb or more, yet still more preferably 800 ppb or more, and especially preferably 950 ppb or more. By generating electrolyzed water by using the solid polymer membrane electrode of the present invention, it becomes possible to regulate the dissolved-hydrogen amount to the above-described range.

In the case of performing the electrolysis of water to be electrolyzed under the same condition as that described above, the cell voltage 100 seconds after starting the electrolysis is preferably 9.0 V or less, more preferably 7.0 V or less, still more preferably 6.0 V or less, yet still more preferably 5.0 V or less, and especially preferably 4.0 V or less. By generating electrolyzed water by using the solid polymer membrane electrode of the present invention, it becomes possible to regulate the cell voltage to the above-described range.

The measurement methods of the above-described measurement of pH, dissolved-hydrogen amount, and cell voltage are not particularly limited, and conventional known measurement methods are suitably applicable. Specifically, the measurement methods described in the section of Examples can be adopted.

EXAMPLES

(Production of solid polymer membrane electrode)

The solid polymer membrane electrode of the present invention was produced according to the following procedures.

(1) Each cation exchange membrane described in the following Table 1, that is a solid polymer membrane, was cut in a size of 250 mm $\times$ 80 mm by using a cutter knife.
(2) For the purpose of cleaning, the cut membrane was dipped in pure water at 50°C for 10 minutes.
(3) As a pre-treatment, the above-described membrane was dipped in 5% hydrochloric acid at 50°C for 10 minutes.
(4) In order to not attach Pt to other portions than the plating range, the membrane was masked with a PEEK-made tool.

(5) The membrane was dipped in an aqueous solution containing 1 to 10 wt% of a Pt ion at room temperature for 3 hours, thereby adsorbing (ion-exchanging) the Pt ion to the membrane.

(6) The above-described membrane was dipped in an aqueous solution having 1 wt% of SBH (sodium borohydride) dissolved therein at 50°C, thereby reducing the ion-exchanged Pt ion on the membrane surface.

(7) For the purpose of cleaning, the membrane was dipped in pure water at 50°C for 10 minutes.

(8) The PEEK-made tool having been subjected to masking was removed from the membrane.

(9) As a post-treatment, the membrane was dipped in 5% hydrochloric acid at 50°C for 10 minutes.

(10) For the purpose of cleaning, the membrane was dipped in pure water at 50°C for 10 minutes.

(Measurement of ion exchange capacity per unit area of cation exchange membrane)

The cation exchange membrane was dipped in a 1 mol/L-HCl aqueous solution for 10 hours or more and then thoroughly cleaned with ion-exchanged water. Subsequently, the cation exchange membrane was cut out in a rectangular shape by using a cutter knife, and the length and width were measured to determine an area of the cation exchange membrane for measurement (A cm$^2$).

Thereafter, a counter ion of the ion exchange group of the above-described cation exchange membrane was replaced from a hydrogen ion into a sodium ion by using a 1 mol/L-NaCl aqueous solution, and the liberated hydrogen ion was quantitatively analyzed with a sodium hydroxide aqueous solution by using a potentiometric titrator (COMTITE-900, manufactured by Hiranuma Sangyo Co., Ltd.) (B mol).

An ion exchange capacity per unit area of the cation exchange membrane was determined on the basis of the above-described measured value according to the following formula.

$$\text{Ion exchange capacity per unit area} = B \times 1000/A \text{ [mmol/cm}^2\text{]}$$

(Measurement of membrane thickness of cation exchange membrane)

After dipping the cation exchange membrane in a 0.5 mol/L-NaCl solution for 4 hours or more, the moisture on the surface of the membrane was wiped off with a tissue paper, and the thickness of the membrane was measured with a micrometer, MED-25PJ (manufactured by Mitsutoyo Corporation).

(Measurement of area change ratio of cation exchange membrane)

After dipping the cation exchange membrane in a 0.5 mol/L-NaCl solution for 4 hours or more and then thoroughly cleaning with ion exchange water, the membrane was cut in a size of 200 mm × 200 mm. After allowing this to stand in a room at 25°C ± 2°C and a relative humidity of 55% ± 10% for 24 hours, the length and width were measured to determine a dry area S1. Subsequently, the above-described sample in a dry state was dipped in and swollen with ion-exchanged water at a liquid temperature of 25°C ± 2°C for 24 hours, to determine an area S2 of the cation exchange membrane in a swollen state in the same manner. An area change ratio was calculated on the basis of these values according to the following formula.

$$\text{Area change ratio} = (S2 - S1)/S1 \times 100 \text{ [%]}$$

(Measurement of membrane thickness of catalyst layer)

A membrane thickness of the catalyst layer (Pt membrane thickness) of the above-prepared solid polymer membrane electrode was measured with a fluorescent X-ray analyzer (6000VX, manufactured by Hitachi High-Tech Science Corporation).

(Electrolysis test)

The above-prepared solid polymer membrane electrode was sandwiched with power feeders having a titanium expanded metal plated with platinum, thereby preparing an electrolytic cell. Tap water (pH: 7.0) was electrolyzed by using this electrolytic cell under the following electrolysis condition.

<Electrolysis condition>

Current amount per unit water intake amount: 6 A/(L/min)

<Measurement>

• Measurement of cell voltage

On flowing a constant current of 6 A using a stabilized power supply, ePS240WL, manufactured by Fujitsu Ltd., a voltage was recorded.

• Measurement of dissolve-hydrogen amount

A dissolved-hydrogen amount was measured with a portable hydrogen meter, DH-35A, manufactured by DKK-Toa Corporation.

• Measurement of pH

A pH was recorded with a portable pH meter, ION/pH METER IM-22P, manufactured by DKK-Toa Corporation.

<Evaluation>

The results obtained by measuring the voltage and the dissolved-hydrogen amount 100 seconds after the electrolysis, and the maximum value of the pH during the electrolysis are shown in Table 1.

Table 1

| | Material | Kind of membrane | Manufacturer | Thickness of solid polymer membrane ($\mu$m) | Area change ratio (%) | Thickness of Pt membrane ($\mu$m) | Ion exchange amount per unit area (mmol/cm$^2$) | 100 seconds after hydrolysis | | pH (maximum value) |
|---|---|---|---|---|---|---|---|---|---|---|
| | | | | | | | | Voltage (V) | Dissolved hydrogen (ppb) | |
| Example 1 | Hydrocarbon-based cation exchange membrane | Membrane A | ASTOM Corporation | 30 | 11.1 | 0.05 | 0.008 | 3.62 | 1000 | 7.81 |
| Example 2 | | Membrane B | ASTOM Corporation | 70 | 15.0 | 0.15 | 0.020 | 5.1 | 600 | 8.2 |
| Example 3 | | Membrane C | ASTOM Corporation | 120 | 20.0 | 0.30 | 0.029 | 3.67 | 720 | 7.97 |
| Comparative Example 1 | Hydrocarbon-based cation exchange membrane | CIMS | ASTOM Corporation | 150 | 13.5 | 0.20 | 0.033 | 6.69 | 670 | 8.54 |
| Comparative Example 2 | | CM-1 | ASTOM Corporation | 150 | 14.0 | 0.17 | 0.036 | 4.68 | 950 | 8.53 |
| Comparative Example 3 | | CMB | ASTOM Corporation | 210 | 16.6 | 0.08 | 0.050 | 6.63 | 800 | 9.62 |
| Comparative Example 4 | Fluorine-based cation exchange membrane | Naflon 117 | Du Pont | 183 | 25.0 | 0.50 | 0.034 | 3.57 | 1150 | 9.26 |
| Comparative Example 5 | | CMP | Asahi Glass Co., Ltd. | 440 | - | 1.33 | 0.071 | 7.51 | 800 | 9.21 |

From the foregoing results, by performing the electrolysis by using the solid polymer membrane (hydrocarbon-based cation exchange membrane) of each of the Examples of the present invention, in which the ion exchange capacity is 0.002 mmol/cm$^2$ or more and 0.030 mmol/cm$^2$ or less, the increase of the pH was suppressed. As a result, it has been noted that electrolyzed hydrogen water in which the maximum value of the pH is kept in the vicinity of 8, and the dissolved-hydrogen amount is 500 ppb or more is obtained.

On the other hand, when the hydrolysis is performed by using the electrode using the solid polymer membrane of each of the Comparative Examples, in which the ion exchange capacity is more than 0.030 mmol/cm$^2$, there were revealed such results that the maximum value of the pH increases to around 9.

From these results, it has been noted that by using the hydrocarbon-based cation exchange membrane having an ion exchange capacity falling within a specified range according to the present invention, the increase of the pH of the generated electrolyzed hydrogen water can be suppressed to an extent of equal to or more than that in the conventionally used fluorine-based polymer cation exchange membrane, and the hydrocarbon-based cation exchange membrane of the present invention is suitably used for electrolytic generation.

In addition, the hydrocarbon-based cation exchange membrane revealed such results that the area change ratio is small as compared with the fluorine-based cation exchange membrane. These results demonstrate that as compared with the fluorine-based polymer cation exchange membrane, the hydrocarbon-based cation exchange membrane is small in the degree of shrinkage between the case where the membrane contains moisture and is swollen and the case where the membrane is dried, and it has been noted that the hydrocarbon-based cation exchange membrane is also excellent from the standpoint of a generation ratio of fault when used for the electrolyzed water generator.

REFERENCE SIGNS LIST

1: Electrolyzed water generator
2: Water-purifying cartridge
3a, 3b: Electrolytic cell
4: Cathode chamber
5: Cathode chamber inlet
6: Cathode chamber outlet
7: Cathode
8: Diaphragm
9: Anode
10: Anode chamber
11: Anode chamber inlet
12: Anode chamber outlet
13: Solid polymer membrane
14a, 14b: Catalyst layer
15: Solid polymer membrane electrode
16a: Anode power feeder
16b: Cathode power feeder
17: Water supply channel
17a: First water supply channel
17b: Second water supply channel
18: First channel switching valve
19: Controller
22: Channel switching valve
31: First channel
31b: Spout
32: Second channel
32a: Drain port

Claims

1. A solid polymer membrane electrode for generating electrolyzed water, wherein
the solid polymer membrane electrode comprises a solid polymer membrane and catalyst layers containing a platinum group metal and provided on the back and front of the solid polymer membrane;

the solid polymer membrane has an ion exchange capacity per unit area of 0.002 mmol/cm$^2$ or more and 0.030 mmol/cm$^2$ or less, the ion exchange capacity per unit area being measured as defined in the description; and
the solid polymer membrane is a hydrocarbon-based cation exchange membrane, containing at least one hydrocarbon-based polymer selected from the group consisting of sulfonated poly(arylene ether ether ketone) ("SPEEK"), sulfonated poly(ether ether ketone ketone) ("SPEEKK"), sulfonated poly(arylene ether sulfone) ("SPES"), sulfonated poly(arylene ether benzonitrile), sulfonated polyimide ("SPI"), sulfonated poly(styrene), sulfonated poly(styrene-b-isobutylene-b-styrene) ("S-SIBS"), and sulfonated poly(styrenedivinylbenzene).

2. The solid polymer membrane electrode according to claim 1, wherein a membrane thickness thereof is 10 μm or more and 170 μm or less.

3. The solid polymer membrane electrode according to claim 1, wherein a thickness of each of the catalyst layers is 0.30 μm or less.

4. The solid polymer membrane electrode according to claim 1, wherein the platinum group metal is at least one metal selected from the group consisting of platinum, iridium, platinum oxide, and iridium oxide.

5. The solid polymer membrane electrode according to claim 1, which is suitable for generating electrolyzed water by using an aqueous solution containing a cation.

6. The solid polymer membrane electrode according to claim 5, wherein the aqueous solution containing a cation is tap water.

7. The solid polymer membrane electrode according to claim 1, which is suitable for generating electrolyzed water for beverage use.

8. An electrolyzed water generator comprising at least:

   an electrolytic cell including the solid polymer membrane electrode according to claim 1 and an anode power feeder and a cathode power feeder disposed opposite to each other via the solid polymer membrane electrode;
   a unit for flowing water to be electrolyzed into the electrolytic cell; and
   a unit for applying a voltage to the water to be electrolyzed within the electrolytic cell to flow an electric current thereinto.

9. The electrolyzed water generator according to claim 8, further comprising a polarity switching unit of the voltage to be applied to the anode power feeder and the cathode power feeder in the solid polymer membrane electrode within the electrolytic cell.

10. A generation method of electrolyzed water comprising the steps of:

   preparing an electrolytic cell in which an anode chamber containing an anode and a cathode chamber containing a cathode are isolated from each other with the solid polymer membrane electrode according to claim 1;
   flowing water to be electrolyzed into each of the cathode chamber and the anode chamber;
   applying a voltage between the cathode and the anode to flow an electric current into the water to be electrolyzed, thereby generating electrolyzed water; and
   taking out the electrolyzed water generated within the cathode chamber.

11. Use of a solid polymer membrane which has an ion exchange capacity per unit area of 0.002 mmol/cm$^2$ or more and 0.030 mmol/cm$^2$ or less and is a hydrocarbon-based cation exchange membrane, containing at least one hydrocarbon-based polymer selected from the group consisting of sulfonated poly(arylene ether ether ketone) ("SPEEK"), sulfonated poly(ether ether ketone ketone) ("SPEEKK"), sulfonated poly(arylene ether sulfone) ("SPES"), sulfonated poly(arylene ether benzonitrile), sulfonated polyimide ("SPI"), sulfonated poly(styrene), sulfonated poly(styrene-b-isobutylene-b-styrene) ("S-SIBS"), and sulfonated poly(styrene-divinylbenzene) for producing the solid polymer membrane electrode according to claim 1, the ion exchange capacity per unit area being measured as defined in the description.

12. Use of the solid polymer membrane electrode according to claim 1 for generating electrolyzed water by using an aqueous solution containing a cation.

**13.** The use according to claim 12, wherein the aqueous solution containing a cation is tap water.

**14.** The use according to claim 12, wherein the generated electrolyzed water is used for producing beverage.

**Patentansprüche**

**1.** Feste Polymermembran-Elektrode zur Erzeugung von elektrolysiertem Wasser, wobei
die feste Polymermembran-Elektrode eine feste Polymermembran und Katalysatorschichten, die ein Platingruppenmetall enthalten und auf der Rückseite und der Vorderseite der festen Polymermembran vorgesehen sind, umfasst,
die feste Polymermembran eine Ionenaustauschkapazität pro Flächeneinheit von 0,002 mmol/cm$^2$ oder mehr und 0,030 mmol/cm$^2$ oder weniger aufweist, wobei die Ionenaustauschkapazität pro Flächeneinheit wie in der Beschreibung definiert gemessen wird; und
die feste Polymermembran eine Kationenaustauschmembran auf Kohlenwasserstoffbasis ist, die mindestens ein Polymer auf Kohlenwasserstoffbasis enthält, das aus der Gruppe ausgewählt ist, die aus sulfoniertem Poly(arylenetheretherketon) ("SPEEK"), sulfoniertem Poly(etheretherketonketon) ("SPEEKK") sulfoniertem Poly(arylenethersulfon) ("SPES"), sulfoniertem Poly(arylenetherbenzonitril), sulfoniertem Polyimid ("SPI"), sulfoniertem Poly(styrol), sulfoniertem Poly(styrol-b-isobutylen-b-styrol) ("S-SIBS"), und sulfoniertem Poly(styrol-divinylbenzol) besteht.

**2.** Feste Polymermembran-Elektrode gemäß Anspruch 1, wobei eine Membrandicke davon 10 μm oder mehr und 170 μm oder weniger beträgt.

**3.** Feste Polymermembran-Elektrode gemäß Anspruch 1, wobei eine Dicke jeder der Katalysatorschichten 0,30 μm oder weniger beträgt.

**4.** Feste Polymermembran-Elektrode gemäß Anspruch 1, wobei das Platingruppenmetall mindestens ein Metall ist, das aus der Gruppe ausgewählt ist, die aus Platin, Iridium, Platinoxid und Iridiumoxid besteht.

**5.** Feste Polymermembran-Elektrode gemäß Anspruch 1, die geeignet ist zur Erzeugung von elektrolysiertem Wasser unter Verwendung einer wässrigen Lösung, die ein Kation enthält.

**6.** Feste Polymermembran-Elektrode gemäß Anspruch 5, wobei die wässrige Lösung, die ein Kation enthält, Leitungswasser ist.

**7.** Feste Polymermembran-Elektrode gemäß Anspruch 1, die geeignet ist zur Erzeugung von elektrolysiertem Wasser zur Verwendung in Getränken.

**8.** Generator für elektrolysiertes Wasser, mindestens umfassend:

eine Elektrolysezelle mit der festen Polymermembran-Elektrode gemäß Anspruch 1 und einer Anodenstromversorgung und einer Kathodenstromversorgung, die über die feste Polymermembran-Elektrode einander gegenüberliegend angeordnet sind;
eine Einheit zum Einströmen von zu elektrolysierendem Wasser in die Elektrolysezelle; und
eine Einheit zum Anlegen einer Spannung an das zu elektrolysierende Wasser innerhalb der Elektrolysezelle, um einen elektrischen Strom hineinfließen zu lassen.

**9.** Generator für elektrolysiertes Wasser gemäß Anspruch 8, ferner umfassend eine Einheit zum Wechseln der Polarität der an die Anodenstromversorgung und die Kathodenstromversorgung in der festen Polymermembran-Elektrode innerhalb der Elektrolysezelle anzulegenden Spannung.

**10.** Verfahren zur Erzeugung von elektrolysiertem Wasser, umfassend die Schritte:

Herstellen einer Elektrolysezelle, in der eine Anodenkammer, die eine Anode enthält, und eine Kathodenkammer, die eine Kathode enthält, mit der festen Polymermembran-Elektrode gemäß Anspruch 1 voneinander isoliert sind;
Einströmen von zu elektrolysierendem Wasser jeweils in die Kathodenkammer und die Anodenkammer;
Anlegen einer Spannung zwischen der Kathode und der Anode, um einen elektrischen Strom in das zu elektrolysierende Wasser fließen zu lassen, wodurch elektrolysiertes Wasser erzeugt wird; und Entnahme des in der Kathodenkammer erzeugten elektrolysierten Wassers.

11. Verwendung einer festen Polymermembran, die eine Ionenaustauschkapazität pro Flächeneinheit von 0,002 mmol/cm$^2$ oder mehr und 0,030 mmol/cm$^2$ oder weniger aufweist und eine Kationenaustauschmembran auf Kohlenwasserstoffbasis ist, die mindestens ein Polymer auf Kohlenwasserstoffbasis enthält, das aus der Gruppe ausgewählt ist, die aus sulfoniertem Poly(arylenetheretherketon) ("SPEEK"), sulfoniertem Poly(etheretherketonketon) ("SPEEKK"), sulfoniertem Poly(arylenethersulfon) ("SPES"), sulfoniertem Poly(arylenetherbenzonitril), sulfoniertem Polyimid ("SPI"), sulfoniertem Poly(styrol), sulfoniertem Poly(styrol-b-isobutylen-b-styrol) ("S-SIBS") und sulfoniertem Poly(styrol-divinylbenzol) besteht, zur Herstellung der festen Polymermembran-Elektrode gemäß Anspruch 1, wobei die Ionenaustauschkapazität pro Flächeneinheit wie in der Beschreibung definiert gemessen wird.

12. Verwendung der festen Polymermembran-Elektrode gemäß Anspruch 1 zur Erzeugung von elektrolysiertem Wasser unter Verwendung einer wässrigen Lösung, die ein Kation enthält.

13. Verwendung gemäß Anspruch 12, wobei die wässrige Lösung, die ein Kation enthält, Leitungswasser ist.

14. Verwendung gemäß Anspruch 12, wobei das erzeugte elektrolysierte Wasser zur Herstellung von Getränken verwendet wird.


**Revendications**

1. Électrode à membrane polymère solide pour générer de l'eau électrolysée, dans laquelle
l'électrode à membrane polymère solide comprend une membrane polymère solide et des couches de catalyseur contenant un métal du groupe du platine et disposées sur l'arrière et l'avant de la membrane polymère solide ;
la membrane polymère solide présente une capacité d'échange d'ions par surface unitaire de 0,002 mmol/cm$^2$, ou plus, et de 0,030 mmol/cm$^2$, ou moins, la capacité d'échange d'ions par surface unitaire étant mesurée telle que définie dans la description ; et
la membrane polymère solide est une membrane échangeuse de cations à base d'hydrocarbures contenant au moins un polymère à base d'hydrocarbures sélectionné dans le groupe consistant en poly(arylène-éther-éther-cétone) sulfoné (« SPEEK »), poly(éther-éther-cétone-cétone) sulfoné (« SPEEKK »), poly(arylène-éther-cétone) sulfoné (« SPES »), poly(arylène-éther-benzonitrile) sulfoné, polyimide sulfoné (« SPI »), poly(styrène) sulfoné, le poly(styrène-b-isobutylène-b-styrène) sulfoné (« S-SIBS ») et poly(styrène-divinylbenzène) sulfoné.

2. Électrode à membrane polymère solide selon la revendication 1, dans laquelle une épaisseur de membrane de celle-ci est 10 $\mu$m ou plus et 170 $\mu$m ou moins.

3. Électrode à membrane polymère solide selon la revendication 1, dans laquelle une épaisseur des couches de catalyseur est 0,30 $\mu$m ou moins.

4. Électrode à membrane polymère solide selon la revendication 1, dans laquelle le métal du groupe du platine est au moins un métal sélectionné dans le groupe consistant en platine, iridium, oxyde de platine et oxyde d'iridium.

5. Électrode à membrane polymère solide selon la revendication 1, qui est appropriée pour générer de l'eau électrolysée en utilisant une solution aqueuse contenant un cation.

6. Électrode à membrane polymère solide selon la revendication 5, dans laquelle la solution aqueuse contenant un cation est l'eau du robinet.

7. Électrode à membrane polymère solide selon la revendication 1, qui est appropriée pour générer de l'eau électrolysée pour une consommation de boissons.

8. Générateur d'eau électrolysée comprenant au moins :

une cellule électrolytique incluant l'électrode à membrane polymère solide selon la revendication 1 et un dispositif d'alimentation en énergie d'anode et un dispositif d'alimentation en énergie de cathode disposés à l'opposé l'un de l'autre par le biais de l'électrode à membrane polymère solide;

une unité pour faire circuler de l'eau à électrolyser dans la cellule électrolytique ;
et
une unité pour appliquer une tension à l'eau à électrolyser à l'intérieur de la cellule électrolytique pour faire circuler un courant électrique dans celle-ci.

**9.** Générateur d'eau électrolysée selon la revendication 8, comprenant en outre une unité de commutation de polarité de la tension à appliquer au dispositif d'alimentation en énergie d'anode et au dispositif d'alimentation en énergie de cathode dans l'électrode à membrane polymère solide à l'intérieur de la cellule électrolytique.

**10.** Procédé de génération d'eau électrolysée comprenant les étapes consistant :

à préparer une cellule électrolytique dans laquelle une chambre anodique contenant une anode et une chambre cathodique contenant une cathode sont isolées l'une de l'autre avec l'électrode à membrane polymère solide selon la revendication 1 ;
à faire circuler de l'eau à électrolyser dans chacune de la chambre cathodique et de la chambre anodique ;
à appliquer une tension entre la cathode et l'anode pour faire circuler un courant électrique dans l'eau à électrolyser, ce qui permet de générer de l'eau électrolysée ; et
à prélever l'eau électrolysée générée à l'intérieur de la chambre cathodique.

**11.** Utilisation d'une membrane polymère solide qui présente une capacité d'échange d'ions par surface unitaire de 0,002 mmol/cm$^2$, ou plus, et de 0,030 mmol/cm$^2$, ou moins, et qui est une membrane échangeuse de cations à base d'hydrocarbures contenant au moins un polymère à base d'hydrocarbures sélectionné dans le groupe consistant en poly(arylène-éther-éther-cétone) sulfoné (« SPEEK »), poly(éther-éther-cétone-cétone) sulfoné (« SPEEKK »), poly(arylène-éther-cétone) sulfoné (« SPES »), poly(arylène-éther-benzonitrile) sulfoné, polyimide sulfoné (« SPI »), poly(styrène) sulfoné, poly(styrène-b-isobutylène-b-styrène) sulfoné (« S-SIBS ») et poly(styrène-divinylbenzène) sulfoné pour produire l'électrode à membrane polymère solide selon la revendication 1, la capacité d'échange d'ions par surface unitaire étant mesurée telle que définie dans la description.

**12.** Utilisation de l'électrode à membrane polymère solide selon la revendication 1 pour générer de l'eau électrolysée en utilisant une solution aqueuse contenant un cation.

**13.** Utilisation selon la revendication 12, dans laquelle la solution aqueuse contenant un cation est l'eau du robinet.

**14.** Utilisation selon la revendication 12, dans laquelle l'eau électrolysée générée est utilisée pour produire une boisson.

[Fig. 1]

[Fig. 2]

[Fig. 3]

WATER TO BE
ELECTROLYZED

ELECTROLYZED
HYDROGEN WATER

ACIDIC WATER

CONTROLLER

**EP 3 536 824 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H09077672 A
- US 4384941 A
- WO 2014157389 A1
- JP 2008108673 A
- JP 2006206632 A
- JP 2008045068 A
- JP 2005005171 A
- JP 2016022454 A